# EUROPÄISCHE PATENTSCHRIFT

(11) **EP 3 541 562 B1**
(45) Veröffentlichungstag und Bekanntmachung des Hinweises auf die Patenterteilung: **01.07.2020**
(21) Anmeldenummer: 17798218.8
(22) Anmeldetag: 16.11.2017
(51) Int. Cl.: B23K 20/04, B21B 1/46

(54) **VERFAHREN UND VORRICHTUNG ZUR HERSTELLUNG EINES KONTINUIERLICHEN BANDFÖRMIGEN VERBUNDMATERIALS**
METHOD AND DEVICE FOR PRODUCING A CONTINUOUS STRIP-SHAPED COMPOSITE MATERIAL
PROCÉDÉ ET DISPOSITIF DE FABRICATION D'UN MATÉRIAU COMPLEXE SOUS FORME DE BANDE CONTINUE

(30) Priorität: 18.11.2016 DE 102016222813; 07.12.2016 DE 102016224412; 28.12.2016 DE 102016226277
(43) Veröffentlichungstag der Anmeldung: 25.09.2019
(73) Patentinhaber: SMS Group GmbH, 40237 Düsseldorf (DE)
(72) Erfinder: RUNKEL, Thomas, 57074 Siegen (DE)
(74) Vertreter: Klüppel, Walter
(86) Internationale Anmeldenummer: PCT/EP2017/079415
(87) Internationale Veröffentlichungsnummer: WO 2018/091572

(56) Entgegenhaltungen:
- EP-A1- 1 980 345
- DE-A1- 3 332 656
- DE-A1-102012 207 503
- DE-B4- 10 124 594
- JP-A- S62 214 887
- US-A- 3 620 880

## Beschreibung

Die Erfindung betrifft ein Verfahren zur Herstellung eines kontinuierlichen bandförmigen Verbundmaterials nach dem Oberbegriff von Anspruch 1, und eine entsprechende Vorrichtung nach dem Oberbegriff von Anspruch 11.

Nach dem Stand der Technik ist es bekannt, zumindest zwei Materialpartner aus Metall bzw. Stahl mittels Walz- bzw. Warmschweißen zu einem Verbundmaterial zusammenzufügen. Dies ist z.B. in EP 1 690 606 B1, EP 201 202 B1, EP 053 600 B1 und EP 04 063 B1 offenbart. Hiernach werden plattenförmige Bleche zunächst aufeinander gebracht, anschließend zu einem Plattenpaket miteinander verschweißt, und dann zu einem walzplattierten Warmband bzw. Verbundmaterial warmgewalzt. Eine solche Technologie bringt den Nachteil mit sich, dass der Zwischenschritt, wonach die aufeinander gelegten plattenförmigen Bleche zunächst miteinander verschweißt werden, einen Mehraufwand für den Produktionsablauf bedeutet und die maximale Produktionskapazität begrenzt.

Aus DE 101 24 594 B4 ist ein gattungsgemäßes Verfahren nach dem Oberbegriff von Anspruch 1 bekannt, zum Herstellen eines Verbundbandes aus Stahl durch Walzplattieren eines direkt gegossenen Stahlbandes sowie die Verwendung eines solchen Verbundbandes. Bei diesem Verfahren wird ein Kernband nach dem Zweirollenverfahren direkt gegossen und anschließend mit einem metallenen Plattierungsband mit korrosionsarmen bis korrosionsbeständigen Kaltbandeigenschaften plattiert. Dies erfolgt dadurch, dass auf das aus der Gießhitze kommende Kernband das Plattierungsband als Kaltband inline aufplattiert wird. Die Produktionsgeschwindigkeit und die daraus resultierende Wirtschaftlichkeit dieses Verfahrens ist wegen des Vergießens des Kernbands nach dem Zweirollenverfahren limitiert.

Aus DE 28 55 804 A sind ein Plattierverfahren und eine Vorrichtung zur Herstellung von plattierten Blechen bekannt, insbesondere ein Verfahren und eine Vorrichtung zur kontinuierlichen Erzeugung eines plattierten Bleches in der Weise, dass kontinuierlich ein geschmolzenes Metall zu einem endlosen verfestigten Band gegossen wird, wobei eine oder beide Oberflächen des warmen Bandes kontinuierlich mit einem Plattierungsmetall bedeckt wird, wobei die so gebildete Anordnung aus gegossenem Band und Plattiermaterial warmgewalzt wird. Zur Erzeugung des endlosen verfestigten Bandes kommt ein wassergekühltes endloses Gießformsystem zum Einsatz, welches eine sich bewegende Kokille aufweist, die zwischen gleiskettenartigen Kokillenbahnen ausgebildet wird. Vom anderen Ende dieses Formraumes wird ein gegossenes Band abgezogen, das durch Kühlung verfestigt wird. Die Erzeugung eines gegossenen Bandes durch eine solcherart bewegte Kokille kann nur mit einer begrenzten Geschwindigkeit durchgeführt werden, woraus nachteilig eine limitierte Wirtschaftlichkeit resultiert.

Aus JP S62 214887 A ist eine gattungsgemäße Vorrichtung nach dem Oberbegriff von Anspruch 11 bekannt.

Bei Verarbeitung von Stahl erfolgt ein Warmwalzen des Materials typischerweise bei einer Temperatur oberhalb der Rekristallisationstemperatur von Stahl, d.h. bei einer Temperatur von beispielsweise > 720 °C.

Entsprechend liegt der Erfindung die Aufgabe zugrunde, die Herstellung eines kontinuierlichen Metallbandes in Form eines bandförmigen Verbundmaterials, bei der zumindest eine Gießmaschine zum Einsatz kommt, hinsichtlich der Wirtschaftlichkeit zu verbessern, bei gleichzeitiger Optimierung des möglichen Produktspektrums.

Diese Aufgabe wird durch ein Verfahren gemäß Anspruch 1 und durch eine Vorrichtung mit den in Anspruch 11 angegebenen Merkmalen gelöst. Vorteilhafte Weiterbildungen der Erfindung sind Gegenstand der abhängigen Ansprüche.

Ein Verfahren nach der vorliegenden Erfindung dient zur Herstellung eines kontinuierlichen Metallbandes in Form eines bandförmigen Verbundmaterials, mit den Schritten: (i) Bereitstellen eines Grundwerkstoffs, der mit zumindest einer Gießmaschine als kontinuierlicher Strang insbesondere aus Stahl erzeugt wird, und Bereitstellen zumindest eines Plattierungswerkstoffs, der in Form zumindest eines Metallbands von einer Coil-Abwicklungseinrichtung abgewickelt wird; (ii) Zusammenführen einer Bramme, die sich aus dem mit der Gießmaschine erzeugten Strang durch Erstarren gebildet hat, und des von der Coil-Abwicklungseinrichtung abgewickelten Metallbands ; und (iii) Warmwalzen der in Richtung zueinander gebrachten Materialien gebildet aus der Bramme, die sich aus dem mit der Gießmaschine erzeugten Strang durch Erstarren gebildet hat, und dem zumindest einen von der Coil-Abwicklungseinrichtung abgewickelten Metallband, so dass damit durch Walzplattieren ein einziges kontinuierliches bandförmiges Verbundmaterial hergestellt wird, das aus dem Grundwerkstoff und dem zumindest einen Plattierungswerkstoff besteht. Der Grundwerkstoff wird in der Gießmaschine in vertikaler Richtung stranggegossen und und tritt durch eine Öffnung einer Kokille der Gießmaschine in ein Strangführungssystem mit einer Kühlung aus. Die Coil-Abwicklungseinrichtung ist in einer beheizbaren Kammer aufgenommen, wodurch das darauf aufgewickelte Metallband erwärmt wird. Vor dem Schritt (ii) und/oder während des Schritts (ii) werden die aus dem mit der Gießmaschine erzeugten Strang durch Erstarren gebildete Bramme und das von der Coil-Abwicklungseinrichtung abgewickelte Metallband mittels einer Induktionsheizung erwärmt, so dass die Bramme und das Metallband im Schritt (ii) im warmen Zustand mit einer Temperatur, die oberhalb der Rekristallisationstemperatur des Grundwerkstoffs und des Plattierungswerkstoffs liegt, zusammengeführt werden. Vor dem Schritt (ii) werden die aus dem mit der Gießmaschine erzeugten Strang durch Erstarren gebildete Bramme entzundert und das von der Coil-Abwicklungseinrichtung abgewickelte Metallband gereinigt, vorzugsweise entzundert. Vor dem Schritt (iii) wird eine Oberflächentemperatur zumindest eines Materialpartners gebildet aus der aus dem mit der Gießmaschine erzeugten Strang gebildeten Bramme und/oder dem von der Coil-Abwicklungseinrichtung abgewickelten Metallband an einer Seite, die dem jeweils anderen Materialpartner gegenüberliegt, mittels einer Induktionsheizung erhöht.

In gleicher Weise sieht die Erfindung eine Vorrichtung zur Herstellung eines kontinuierlichen Metallbandes in Form eines bandförmigen Verbundmaterials vor. Diese Vorrichtung umfasst zumindest eine Gießmaschine, mit der ein kontinuierlicher Strang insbesondere aus Stahl erzeugt wird, der als Grundwerkstoff dient, zumindest eine Coil-Abwicklungseinrichtung, mit der ein Metallband bereitgestellt wird, das als Plattierungswerkstoff dient, und zumindest ein Walzgerüst in Form einer Walzplattierungseinrichtung, die in Linie mit der Gießmaschine und mit der Coil-Abwicklungseinrichtung und jeweils stromabwärts hiervon angeordnet ist. Die Gießmaschine weist eine Kokille mit Wänden auf, zwischen denen der Grundwerkstoff als Flüssigmetall von oben eingefüllt werden kann und nach unten durch eine Öffnung in ein Strangführungssystem mit Kühlung austritt. Die zumindest eine Coil-Abwicklungseinrichtung ist innerhalb einer beheizbaren Kammer positioniert und weist eine Schnellwechseleinrichtung auf, mittels der ein Austauschen von Coils möglich ist, wobei die Schnellwechseleinrichtung eine Schweißeinrichtung umfasst, um in Schritt (i) eines Verfahrens nach Anspruch 1 aufeinander folgende Metallbänder (15) miteinander zu verschweißen. Zwischen einerseits der Gießmaschine und der Coil- Abwicklungseinrichtung und andererseits der Walzplattierungseinrichtung ist eine Zusammenführungseinrichtung angeordnet ist, mittels der eine Bramme, die sich aus dem mit der Gießmaschine erzeugten Strang durch Erstarren gebildet hat, und das von der Coil-Abwicklungseinrichtung abgewickelte Metallband im warmen Zustand in Richtung zueinander gebracht werden können. Stromaufwärts der Zusammenführungseinrichtung und/oder als Teil hiervon ist zumindest eine Erwärmungseinrichtung vorgesehen ist, wobei die Bramme, die sich aus dem mit der Gießmaschine erzeugten Strang durch Erstarren gebildet hat, und das von der Coil-Abwicklungseinrichtung abgewickelte Metallband durch diese Erwärmungseinrichtung hindurch geführt sind. Zwischen einerseits der Gießmaschine und der Coil-Abwicklungseinrichtung und andererseits der Zusammenführungseinrichtung zumindest eine Reinigungseinrichtung, vorzugsweise eine Entzunderungseinrichtung angeordnet ist, mittels der die aus dem mit der Gießmaschine erzeugten Strang durch Erstarren gebildete Bramme und das von der Coil-Abwicklungseinrichtung abgewickelte Metallband reinigbar, vorzugsweise entzunderbar sind. Zwischen der Zusammenführungseinrichtung und der unmittelbar stromabwärts davon angeordneten Walzplattierungseinrichtung ist zumindest eine Temperaturbeeinflussungseinrichtung vorgesehen, mittels welcher die Oberflächentemperatur zumindest eines Materialpartners gebildet aus der aus dem mit der Gießmaschine erzeugten Strang gebildeten Bramme und/oder dem von der Coil-Abwicklungseinrichtung abgewickelten Metallband an einer Seite, die dem jeweils anderen Materialpartner gegenüberliegt, erhöht werden kann, so dass eine Anordnung von Materialpartnern gebildet aus der Bramme, die sich aus dem mit der Gießmaschine erzeugten Strang durch Erstarren gebildet hat, und dem von der Coil-Abwicklungseinrichtung abgewickelten Metallband in der Walzplattierungseinrichtung warmwalzbar ist und damit durch Walzplattieren ein einziges kontinuierliches bandförmiges Verbundmaterial, das aus dem Grundwerkstoff und dem zumindest einen Plattierungswerkstoff besteht, entsteht.

Im Sinne der vorliegenden Erfindung sind die nachstehenden Aspekte wie folgt zu verstehen:
- Das Merkmal "Bramme" ist dahingehend zu verstehen, dass es sich hierbei um einen gegossenen Strang aus Metall handelt, der bereits weitgehend vollständig durcherstarrt ist, so dass ein Walzen dieser Bramme möglich ist, ohne dass dabei die Gefahr besteht, dass noch flüssige Anteile des Metalls aus dem Innern nach außen herausgequetscht werden. Eine solche Bramme kann als ein Endlos-Profil ausgebildet sein, das mittels einer Gießmaschine hergestellt bzw. gegossen wird, z.B. durch Stranggießen.
- Das Merkmal "Zusammenführen der Bramme und des Metallbands", wie z.B. für den Schritt (ii) des erfindungsgemäßen Verfahrens definiert, ist dahingehend zu verstehen ist, dass hierbei diese Materialpartner in Richtung zueinander gebracht werden. Dies kann bedeuten, dass diese Materialpartner sich während des Schritts (ii) bzw. an dessen Ende noch nicht berühren bzw. kontaktieren. Jedenfalls werden die genannten Materialpartner durch das Zusammenführen gemäß Schritt (ii), das in der Zusammenführungseinrichtung durchgeführt wird, derart in Richtung zueinander gebracht, dass anschließend, nämlich in Schritt (iii) des erfindungsgemäßen Verfahrens bzw. in der Walzplattierungseinrichtung der erfindungsgemäßen Vorrichtung eine Anordnung gebildet aus der Bramme und dem Metallband warmgewalzt werden kann.
- Das Attribut "warm" bzw. die Definition "im warmen Zustand", das bzw. die im Zusammenhang mit dem Schritt (ii) genannt ist, bezieht sich auf die Temperatur der Materialpartner, und ist dahingehend zu verstehen, dass diese Temperatur oberhalb der Rekristallisationstemperatur (z.B. 720°C) liegt.

Der Erfindung liegt die wesentliche Erkenntnis zugrunde, dass die Herstellung eines kontinuierlichen bandförmigen Verbundmaterials hinsichtlich Wirtschaftlichkeit und Steigerung der Produktionsgeschwindigkeit dadurch verbessert wird, dass der hierzu bereitgestellte Grundwerkstoff in der Gießmaschine in vertikaler Richtung stranggegossen wird. Für die zugehörige Vorrichtung nach der vorliegenden Erfindung kommt hierbei für die Gießmaschine eine Kokille zum Einsatz, die Wände aufweist, zwischen denen der Grundwerkstoff als Flüssigmetall von oben eingefüllt werden kann und nach unten durch eine Öffnung in ein Strangführungssystem mit Kühlung austritt. Hierdurch lassen sich im Vergleich zu den eingangs genannten Technologien nach dem Stand der Technik, bei denen ein Kernmaterial entweder nach dem Zweirollenverfahren oder mittels einer sich bewegenden Kokille erzeugt wird, wesentlich höhere Durchsätze erzielen, was zu einer verbesserten Wirtschaftlichkeit führt. Des Weiteren ermöglicht die Verwendung von verschiedenen Materialien, die sowohl als Grundwerkstoff mit der Gießmaschine stranggegossen werden als auch als Plattierungswerkstoff in Form eines abgewickelten Metallbands bereitgestellt werden, die Realisierung von spezifischen Materialeigenschaften des erzeugten kontinuierlichen bandförmigen Verbundmaterials.

Als Material für den Grundwerkstoff bzw. den Plattierungswerkstoff können Stahl oder Stahl-Legierungen verwendet werden, oder alternativ auch Nicht-Eisen-Metalle. Grundsätzlich ist es für die vorliegende Erfindung möglich, dass der mit der Gießmaschine erzeugte Strang, aus dem sich dann durch Erstarren die Bramme bildet, und das von der zumindest einen Coil-Abwicklungseinrichtung abgewickelte Metallband aus unterschiedlichen Materialgüten bestehen. Beispielsweise können hierzu unterschiedliche Stahlgüten verwendet werden, die dann im Schritt (iii) des erfindungsgemäßen Verfahrens zu einem einzigen kontinuierlichen bandförmigen Verbundmaterial verbunden werden.

In vorteilhafter Weiterbildung des erfindungsgemäßen Verfahrens wird vor dem Schritt (ii) eine Geschwindigkeit zumindest eines Materialpartners gebildet aus der mit der Gießmaschine erzeugten Strang durch Erstarren gebildeten Bramme und dem von der Coil-Abwicklungseinrichtung abgewickelten Metallband gezielt beeinflusst. Diese Beeinflussung der Geschwindigkeit zumindest einer dieser beiden Materialpartner kann entweder gesteuert oder geregelt erfolgen, in Abhängigkeit von weiteren Prozessgrößen des Gießwalz-Prozesses, was nachstehend noch im Detail erläutert ist. Zur Beeinflussung der Geschwindigkeit der Bramme kann zur Durchführung des erfindungsgemäßen Verfahrens bzw. für die erfindungsgemäße Vorrichtung ein Ausgleichswalzgerüst vorgesehen sein, dass in Linie zwischen der Gießmaschine und der Zusammenführungseinrichtung angeordnet ist, wobei die Bramme durch dieses Ausgleichswalzgerüst hindurchgeführt wird, um deren Geschwindigkeit zu beeinflussen. Die Beeinflussung der Geschwindigkeit des Plattierungswerkstoffs in Form des abgewickelten Metallbands kann direkt mit der zugehörigen Coil-Abwicklungseinrichtung durchgeführt werden.

Das Warmwalzen der Bramme und des abgewickelten Metallbands aus den mit den zu einem einzigen kontinuierlichen bandförmigen Verbundmaterial mittels Warmwalzen wird dadurch verbessert, wenn die Temperatur dieser beiden Materialpartner aneinander angepasst wird, bevor in Schritt (iii) das Warmwalzen der Brammen erfolgt. Zu diesem Zweck werden die Materialpartner vor dem Schritt (ii) und/oder vor dem Schritt (iii) erwärmt, um die Temperatur der Bramme bzw. des Metallbands gezielt zu beeinflussen und an die Temperatur des jeweils anderen Materialpartners anzupassen. Dabei kann es auch vorteilhaft sein, die Temperaturen der Metallpartner bewusst unterschiedlich zu halten, z.B. bei unterschiedlichen Materialien, Materialgüten oder Materialdicken. Hierbei ist es auch möglich, diese Erwärmung für beide Materialpartner gleichzeitig durchzuführen. Zur Erwärmung der Bramme bzw. des Metallbands ist zumindest eine Erwärmungseinrichtung vorgesehen, die stromaufwärts der Zusammenführungseinrichtung und/oder als Teil hiervon angeordnet ist, wobei die Materialpartner durch diese Erwärmungseinrichtung hindurchgeführt wird/werden. Ein besonders hoher Energieeintrag lässt sich z.B. mit einer Erwärmungseinrichtung in Form einer Induktionsheizung erzielen, verbunden mit dem Vorteil, dass diese einen nur geringen Bauraum beansprucht, bei gleichzeitig hoher Energiedichte.

In vorteilhafter Weiterbildung der Erfindung kann vorgesehen sein, dass die aus dem mit der Gießmaschine erzeugten Strang durch Erstarren gebildete Bramme und das von der Coil-Abwicklungseinrichtung abgewickelte Metallband vor dem Schritt (ii) seitlich geführt werden, um dadurch diese Materialpartner relativ zueinander auszurichten. In gleicher Weise kann dies auch während des Schritts (ii) und/oder vor dem Schritt (iii) erfolgen. Hierzu ist zumindest eine Seitenbeeinflussungseinrichtung vorgesehen, die stromaufwärts der Zusammenführungseinrichtung und/oder als Teil dessen angeordnet sein kann. Ergänzend oder alternativ kann diese Seitenbeeinflussungseinrichtung auch stromaufwärts der Walzplattierungseinrichtung angeordnet sein. Die Seitenbeeinflussungseinrichtung kann z.B. in Form einer Führungsrolle oder eines Führungslineals ausgebildet sein, mit der bzw. mit dem die Seitenränder der Brammen in Kontakt gelangen, um wie erläutert seitlich zueinander ausgerichtet zu werden.

In vorteilhafter Weiterbildung der Erfindung kann die vorstehend genannte Seitenbeeinflussungseinrichtung in Form eines Führungslineals ausgebildet sein, das durch einen Aktuator insbesondere mit einer vorbestimmten Kraft in Richtung der Bandmitte bewegt wird. In dieser Weise ist auch eine Ausrichtung der beiden Materialpartner in Richtung der Bandmitte möglich.

In vorteilhafter Weiterbildung der Erfindung kann vorgesehen sein, dass eine Seitenbeeinflussungseinrichtung, vorzugsweise in Form eines Führungslineals, auch stromabwärts der Walzplattierungseinrichtung vorgesehen ist. Für diesen Fall ist sichergestellt, dass das erzeugte kontinuierliche bandförmige Verbundmaterial auch nach dem Schritt (iii) seitlich geführt wird, z.B. um das Verbundmaterial zentriert in der Mitte eines Rollgangs durch die Walzstraße und deren zugehörige Walzgerüste hindurch zu führen. Hierbei kann auch vorgesehen sein, dass ein Führungslineal mit einer vorbestimmten Kraft in Richtung der Bandmitte bewegt wird, um das erzeugte Verbundmaterial an seinen Seitenrändern zu kontaktieren und (ggf. in Richtung der Bandmitte zurück-) zu führen.

Das Verbinden der einzelnen Materialpartner mittels des Warmwalzens in Schritt (iii) bzw. durch die Walzplattierungseinrichtung wird dadurch optimiert, wenn die Bramme, die aus dem mit der Gießmaschine erzeugten Strang durch Erstarren gebildet worden ist, und das von einer Coil-Abwicklungseinrichtung abgewickelte Metallband vor dem Schritt (iii) geeignet gereinigt werden, nämlich an der Oberfläche dieser Materialpartner, die dem jeweils anderen Materialpartner gegenüberliegt und damit beim Warmwalzen in Schritt (iii) in Kontakt gelangt. Hierzu ist für die erfindungsgemäße Vorrichtung zumindest eine Reinigungseinrichtung vorgesehen, die zwischen einerseits der Gießmaschine und der Coil-Abwicklungseinrichtung und andererseits der Zusammenführungseinrichtung angeordnet ist. Ggf. kann die Reinigungseinrichtung auch als Teil der Zusammenführungseinrichtung ausgebildet sein. Eine solche Reinigung der Materialpartner kann mechanisch erfolgen, zum Beispiel durch Strahlen, Bürsten, Schleifen, Hobeln, Fräsen oder dergleichen. Ergänzend oder alternativ hierzu ist es möglich, die Reinigung der Materialpartner in Form eines Entzunderns durchzuführen, wobei ein Fluid, vorzugsweise HochdruckWasser, auf die Oberflächen der Materialpartner aufgebracht wird. Für diesen Fall ist die Reinigungseinrichtung als Entzunderungseinrichtung ausgebildet, mittels der ein Fluid vorzugsweise unter Hochdruck auf die Oberfläche von zumindest einem Materialpartner ausbringbar ist. Das Entzundern der Materialpartner empfiehlt sich insbesondere bei Verwendung von Stahl oder einer Stahl-Legierung.

Das Verbinden der einzelnen Materialpartner mittels des Warmwalzens in Schritt (iii) bzw. durch die Walzplattierungseinrichtung kann weiter dadurch optimiert werden, dass vor dem Schritt (iii) bzw. stromaufwärts der Walzplattierungseinrichtung eine Oberflächentemperatur zumindest eines Materialpartners gebildet aus der Bramme, die sich aus dem mit der Gießmaschine erzeugten Strang durch Erstarren gebildet hat, und dem von der Coil-Abwicklungseinrichtung abgewickelten Metallband erhöht wird. Hierzu ist für die erfindungsgemäße Vorrichtung eine Temperaturbeeinflussungseinrichtung vorgesehen, die zwischen der Zusammenführungseinrichtung und einer unmittelbar stromabwärts davon angeordneten Walzplattierungseinrichtung positioniert ist. Zur Realisierung der Erhöhung der Oberflächentemperatur kann die besagte Temperaturbeeinflussungseinrichtung z.B. als Heizstrahler oder dergleichen ausgebildet sein, der auf die Oberfläche zumindest eines der genannten Materialpartner gerichtet ist.

Die Qualität einer Verbindung von zumindest zwei Materialpartnern, aus denen das gewünschte kontinuierliche bandförmigem Verbundmaterial hergestellt wird, kann weiter dadurch verbessert werden, dass die aus dem mit der Gießmaschine erzeugten Strang durch Erstarren gebildete Bramme und/oder das von der Coil-Abwicklungseinrichtung abgewickelte Metallband in einer Schutzgas-Atmosphäre geführt werden. Hierzu ist eine Schutzgas-Einrichtung vorgesehen, die vor der Zusammenführungseinrichtung angeordnet ist, und/oder als Teil der Zusammenführungseinrichtung und/oder als Teil einer stromabwärts unmittelbar angrenzend an die Zusammenführungseinrichtung angeordneten Walzplattierungseinrichtung ausgebildet ist. Entsprechend wird zumindest einer der genannten Materialpartner bei dem erfindungsgemäßen Verfahren vor dem Schritt (ii) und/oder während des Schritts (ii) und/oder vor dem Schritt (iii) in einer Schutzgas-Atmosphäre geführt.

Falls die Materialpartner aus Stahl oder einer Stahl-Legierung bestehen, wird hierdurch die Bildung von Zunder zumindest vermindert oder gar ausgeschlossen.

Das Verbinden der einzelnen Materialpartner kann des Weiteren dadurch verbessert werden, wenn vor dem Schritt (iii) bzw. stromaufwärts der Walzplattierungseinrichtung eine Profilierung des mit der Gießmaschine erzeugten Strangs bzw. einer hieraus durch Erstarren gebildeten Bramme und/oder des von der Coil-Abwicklungseinrichtung abgewickelten Metallbands erfolgt. Bei einer solchen Profilierung kann zumindest einer der genannten Materialpartner an einem Seitenrand davon schräg angefast werden. Ergänzend und/oder alternativ kann bei einer solchen Profilierung vorgesehen sein, dass zumindest einer der genannten Materialpartner durch einen vertikalen Schnitt besäumt wird. Jedenfalls wird durch die vorstehend genannte Profilierung sichergestellt, dass die Materialpartner, die im Schritt (iii) bzw. durch die Walzplattierungseinrichtung warmgewalzt werden, auch im Bereich ihrer Ränder derart aufeinander liegen bzw. zueinander ausgerichtet sind, dass ein Verbinden dieser Materialpartner durch das anschließende Warmwalzen in homogener Weise gewährleistet ist.

In vorteilhafter Weiterbildung der Erfindung kann vorgesehen sein, dass im Anschluss an den Schritt (iii) eine Materialbeschaffenheit des erzeugten einzigen kontinuierlichen bandförmigen Verbundmaterials erfasst wird, vorzugsweise durch Röntgen und/oder Ultraschall. Zu diesem Zweck ist für die erfindungsgemäße Vorrichtung stromabwärts einer Walzplattierungseinrichtung eine Messeinrichtung vorgesehen, mittels der eine innere Materialbeschaffenheit, insbesondere die Verbindungsqualität des erzeugten einzigen kontinuierlichen bandförmigen Verbundmaterials erfasst werden kann. Zweckmäßigerweise wird auf Grundlage der erfassten Materialbeschaffenheit dann durch eine Steuereinrichtung ein Prozesssignal erzeugt, mit dem für das erfindungsgemäße Verfahren ein Regelkreis ausgebildet werden kann.

In vorteilhafter Weiterbildung des erfindungsgemäßen Verfahrens kann vorgesehen sein, dass dieses Verfahren automatisch in Abhängigkeit von zumindest einer vorbestimmten Prozessgröße durchgeführt wird. Unter Bezugnahme auf die vorhergehende Erläuterung der Erfindung kann diese Prozessgröße z.B. aus der Geschwindigkeit, die vor dem Schritt (ii) für die aus dem mit der Gießmaschine erzeugten Strang durch Erstarren gebildeten Bramme und/oder für das von der Coil-Abwicklungseinrichtung abgewickelte Metallband vorliegt, und/oder aus der Materialbeschaffenheit des erzeugten kontinuierlichen bandförmigen Verbundmaterials bestehen. Des Weiteren kann eine solche Prozessgröße auch gewählt sein aus der Gruppe gebildet insbesondere aus der Gießgeschwindigkeit der Gießmaschine, einer Änderung der Liquid-Core-Reduction des mit der Gießmaschine erzeugten Strangs, einem Temperaturunterschied der Bramme und des Metallbands vor dem Schritt (ii) und/oder vor dem Schritt (iii), einer jeweiligen Geschwindigkeit der Arbeitswalzen der Walzplattierungseinrichtung und/oder einer Dickenreduzierung, die für das erzeugte einzige bandförmigem Verbundmaterial in Schritt (iii) erzielt wird. Auf Grundlage der vorstehend genannten möglichen Prozessgrößen kann das erfindungsgemäße Verfahren als Regelkreis ausgebildet sein und entsprechend automatisch durchgeführt werden.

In vorteilhafter Weiterbildung der Erfindung kann vorgesehen sein, dass eine Geschwindigkeit der jeweiligen Arbeitswalzen einer Walzplattierungseinrichtung derart angesteuert werden, dass einer möglichen "Skibildung" des bandförmigen Verbundmaterials, das durch die bzw. in der Walzplattierungseinrichtung warmgewalzt wird, beim Austreten aus dieser Walzplattierungseinrichtung entgegengewirkt wird. Dies empfiehlt sich insbesondere für eine erste Walzplattierungseinrichtung, die stromabwärts unmittelbar angrenzend an die Zusammenführungseinrichtung angeordnet ist. Entsprechend ist ein weiterer Transport des erzeugten kontinuierlichen bandförmigen Verbundmaterials in der Walzstrasse möglich, ohne dass sich eine "Skibildung" am vorderen Ende des erzeugten bandförmigen Verbundmaterials einstellt und dadurch eine Schädigung von Walzgerüsten stromabwärts der Zusammenführungseinrichtung zu befürchten wäre.

In vorteilhafter Weiterbildung der Erfindung kann vorgesehen sein, dass das erzeugte kontinuierliche bandförmige Verbundmaterial im Anschluss an den Schritt (iii) bzw. stromabwärts einer Walzplattierungseinrichtung, die unmittelbar an die Zusammenführungseinrichtung angrenzt, durchtrennt bzw. vereinzelt wird. Ergänzend und/oder alternativ kann vorgesehen sein, dass stromabwärts einer unmittelbar an die Zusammenführungseinrichtung angeordneten Walzplattierungseinrichtung eine Niederhaltevorrichtung positioniert ist, mittels der eine Skibildung des erzeugten einzigen kontinuierlichen bandförmigen Verbundmaterials verhindert wird.

In vorteilhafter Weiterbildung der Erfindung kann vorgesehen sein, dass eine weitere bzw. eine zweite Coil-Abwicklungseinrichtung vorgesehen ist, mit der in Schritt (i) des erfindungsgemäßen Verfahrens ein weiterer Plattierungswerkstoff in Form eines Metallbands bereitgestellt wird. Diese weitere Coil-Abwicklungseinrichtung ist ebenfalls in Linie mit der Walzplattierungseinrichtung angeordnet, vorzugsweise stromaufwärts hiervon. Entsprechend werden die anschließenden Schritte (ii) und (iii) des erfindungsgemäßen Verfahrens mit insgesamt drei Lagen durchgeführt, die sich aus der Bramme und den beiden abgewickelten Metallbändern gebildet haben. Alternativ hierzu kann vorgesehen sein, dass das Metallband, das von der zweiten Coil-Abwicklungseinrichtung abgewickelt wird, mit dem in Schritt (iii) bereits gebildeten einzigen kontinuierlichen bandförmigen Verbundmaterial im warmen Zustand mit erneuter Durchführung der Schritte (ii) und (iii) verbunden wird. Für diesen Fall ist die zweite Coil-Abwicklungseinrichtung stromabwärts einer ersten Walzplattierungseinrichtung, die unmittelbar an die Zusammenführungseinrichtung angrenzt, angeordnet. Jedenfalls kann beim Einsatz von z.B. zwei Coil-Abwicklungseinrichtungen gemeinsam mit einer Gießmaschine ein kontinuierliches bandförmiges Verbundmaterial hergestellt werden, das z.B. in seiner obersten und untersten Lage aus Stählen mit gleichen Eigenschaftsprofilen besteht, wobei eine mittlere Lage dieses Verbundmaterials z.B. aus einem Stahl gebildet ist, der sich in seinen Eigenschaften von den für die Randlagen verwendeten Materialien unterscheidet.

In vorteilhafter Weiterbildung des erfindungsgemäßen Verfahrens wird in Schritt (iii) der Plattierungswerkstoff auf entgegengesetzten Seiten der Bramme, die sich aus dem mit der Gießmaschine erzeugten Strang durch Erstarren gebildet hat, aufgebracht, wobei der Plattierungswerkstoff aus dem gleichen Material besteht und von jeweils separaten Coil-Abwicklungseinrichtungen abgewickelt wird.

In vorteilhafter Weiterbildung der Erfindung kann vorgesehen sein, zwischen die zusammenzuführenden Materialpartner eine oder mehrere Zwischenschichten in fester, flüssiger oder pulverisierter Form eingebracht werden. Eine solche Zwischenschicht kann die einander gegenüberliegenden Oberflächen der Materialpartner passivieren oder aktivieren. In Folge dessen werden die Verzunderungsneigung an den Oberflächen der Materialpartner verringert, und/oder die Diffusionsvorgänge zwischen den Materialpartnern in vorteilhafter Weise beeinflusst.

Die erfindungsgemäße Anlage kann als HRB-Anlage bezeichnet werden, wobei "HRB" als Abkürzung für HighPerformance-Roll_Bonding steht.

Weitere Vorteile der vorliegenden Erfindung bestehen aus folgenden Aspekten:
- höhere Produktionsleistung,
- bessere Wirtschaftlichkeit,
- Erweiterung der zu produzierenden Stahlsorten,
- Erzeugung von walzplattierten Grobblechen, und
- Erzeugung von walzplattierten Coils.

Nachstehend sind Ausführungsbeispiele der Erfindung anhand einer schematisch vereinfachten Zeichnung im Detail beschrieben.

Es zeigen:
- Fig. 1: eine prinzipielle Seitenansicht einer erfindungsgemäßen Vorrichtung, bei der zumindest zwei Gießmaschinen eingesetzt werden,
- Fig. 2: eine prinzipielle Seitenansicht einer Modifikation einer Zusammenführungseinrichtung, die Teil der Vorrichtung von Fig. 1 sein kann,
- Fig. 3a, 3b: Seitenansichten von Arbeitswalzen einer Walzplattierungseinrichtung, die Teil der Vorrichtung von Fig. 1 ist, und
- Fig. 4: eine prinzipiell vereinfachte vergrößerte Ansicht einer modifizierten Coil-Abwicklungseinrichtung, die Teil der Vorrichtung von Fig. 1 sein kann.

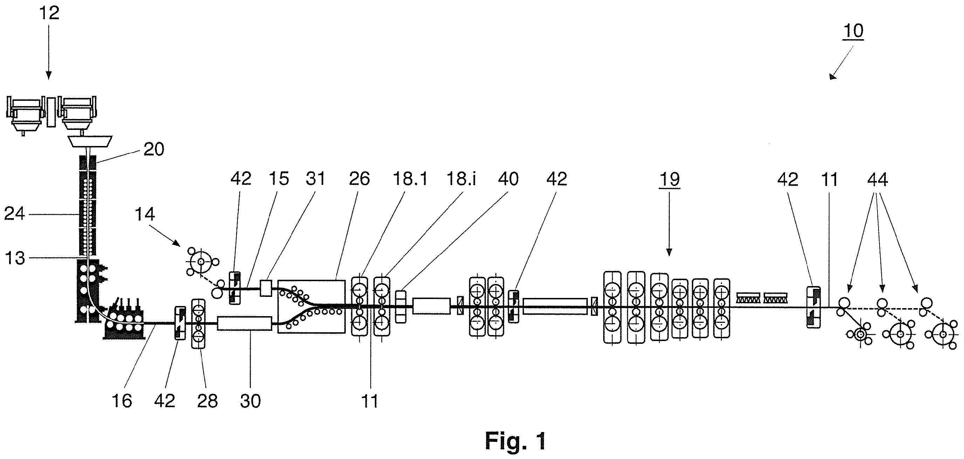

Nachstehend sind unter Bezugnahme auf die Fig. 1 bis 4 bevorzugte Ausführungsformen einer erfindungsgemäßen Vorrichtung 10 und Komponenten hiervon erläutert, wobei diese Vorrichtung 10 zur Herstellung eines Metallbands in Form eines kontinuierlichen bandförmigen Verbundmaterials 11 dient. Gleiche Merkmale in der Zeichnung sind jeweils mit gleichen Bezugszeichen versehen. An dieser Stelle wird gesondert darauf hingewiesen, dass die Zeichnung lediglich vereinfacht und insbesondere ohne Maßstab dargestellt ist.

In der Fig. 1 ist eine prinzipiell vereinfachte Seitenansicht der Vorrichtung 10 nach einer ersten Ausführungsform gezeigt.

Die Vorrichtung 10 umfasst eine Gießmaschine 12, mit der ein kontinuierlicher Strang 13 insbesondere aus Stahl erzeugt wird, der als Grundwerkstoff dient. Die Vorrichtung 10 umfasst ferner zumindest eine Coil-Abwicklungseinrichtung 14, mit der ein Metallband 15 bereitgestellt wird, das als Plattierungswerkstoff dient und geeignet von dieser Coil-Abwicklungseinrichtung 14 abgewickelt werden kann. Aus dem Strang 13 bildet sich durch Erstarren eine Bramme 16, die anschließend gemeinsam mit dem abgewickelten Metallband 15 durch eine Zusammenführungseinrichtung 26, die stromabwärts von der Gießmaschine 12 und der Coil-Abwicklungseinrichtung 14 angeordnet ist, geführt und hierdurch in Richtung zueinander gebracht werden. Die Vorrichtung 10 umfasst des Weiteren zumindest ein Walzgerüst in Form einer Walzplattierungseinrichtung 18.1, die unmittelbar im Anschluss an die Zusammenführungseinrichtung 26 und somit stromabwärts hiervon angeordnet ist. Die Funktion dieser Walzplattierungseinrichtung 18.1 ist nachstehend noch gesondert erläutert.

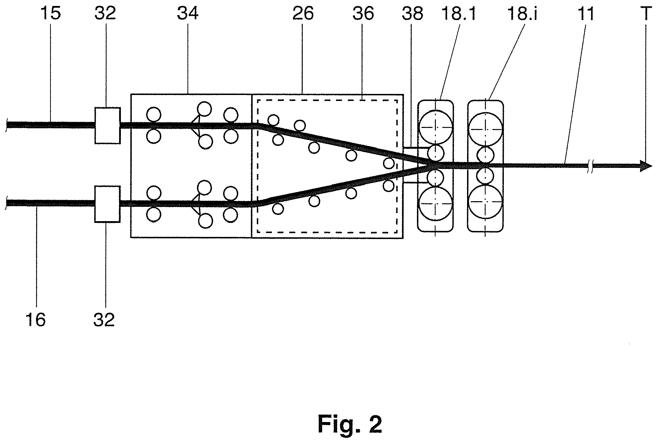

Die Zusammenführungseinrichtung 26 dient zu dem Zweck, die Bramme 16 und das abgewickelte Metallband 15 in Richtung zueinander zu bringen. Bei der in Fig. 1 dargestellten Ausführungsform kann vorgesehen sein, dass die Bramme 16 und das abgewickelte Metallband 15 bereits innerhalb der Zusammenführungseinrichtung 26 in Kontakt miteinander gelangen. Nach einer alternativen Ausführungsform der Zusammenführungseinrichtung 26, die prinzipiell vereinfacht in der Seitenansicht gemäß Fig. 2 gezeigt ist und ebenfalls für die Vorrichtung von Fig. 1 eingesetzt werden kann, ist vorgesehen, dass die Bramme 16 und das abgewickelte Metallband 15 sich nicht innerhalb dieser Zusammenführungseinrichtung 26, sondern erst außerhalb und stromabwärts hiervon kontaktieren, wenn sie in die unmittelbar angrenzend daran positionierte Walzplattierungseinrichtung 18.1 einlaufen.

In Fig. 2 ist mit dem Pfeil "T" eine Transportrichtung angedeutet, in der das erzeugte kontinuierliche bandförmige Verbundmaterial 11 transportiert bzw. bewegt wird (in der Zeichnungsebene von links nach rechts). Bezüglich der Darstellungen von Fig. 1 versteht sich, dass hierin das Verbundmaterial 11 in der gleichen Richtung bewegt wird, nämlich (in der Zeichnungsebene gesehen) von links nach rechts.

Die Vorrichtung 10 weist ein Ausgleichswalzgerüst 28 auf, das in Linie zwischen der Gießmaschine 12 und der Zusammenführungseinrichtung 26 angeordnet ist. Die Bramme 16, die sich durch Erstarren aus dem mit der Gießmaschine 12 erzeugten Strang 13 gebildet hat, wird durch das Ausgleichswalzgerüst 28 hindurchgeführt. Hierdurch ist es möglich, mittels des Ausgleichswalzgerüsts 28 eine Geschwindigkeit der Bramme 16 in Richtung der Zusammenführungseinrichtung 26 zu steuern, vorzugsweise zu regeln. In gleicher Weise kann die Geschwindigkeit, mit der das abgewickelte Metallband 15 in Richtung der Zusammenführungseinrichtung 26 transportiert wird, durch die zugehörige Coil-Abwicklungseinrichtung 14 gesteuert, vorzugsweise geregelt werden. In diesem Zusammenhang ist es von Vorteil, wenn die Ansteuerung des Ausgleichswalzgerüsts 28 und der Coil-Abwicklungseinrichtung 14 mittels einer vorzugsweise gemeinsamen Steuereinrichtung aufeinander abgestimmt ist, so dass die Bramme 16 und das abgewickelte Metallband 15 mit der gleichen Geschwindigkeit in die Zusammenführungseinrichtung 26 einlaufen.

Die Vorrichtung 10 umfasst eine erste Erwärmungseinrichtung 30 (vgl. Fig. 1), die in Linie zwischen der Gießmaschine 12 und der Zusammenführungseinrichtung 26 angeordnet ist, und eine zweite Erwärmungseinrichtung 31, die in Linie zwischen der Coil-Abwicklungseinrichtung 14 und der Zusammenführungseinrichtung 26 angeordnet ist. Die Seitenansicht von Fig. 1 verdeutlicht, dass die Bramme 16 durch die erste Erwärmungseinrichtung 30 hindurchgeführt wird. In gleicher Weise wird das abgewickelte Metallband 15 durch die zweite Erwärmungseinrichtung 31 hindurchgeführt. Hierdurch werden die Bramme 16 und das Metallband 15 nach dem Prinzip der Durcherwärmung erwärmt, wobei mögliche Temperaturunterschiede, die in Folge einer unterschiedlich langen Transportstrecke zwischen der Bramme 16, die sich aus dem mit der Gießmaschine 12 erzeugten Strang 13 durch Erstarren gebildet hat, und dem Metallband 15, das von der Coil-Abwicklungseinrichtung 14 abgewickelt worden ist, auftreten können, angepasst werden. Dabei kann es auch vorteilhaft sein, die Temperaturen der Materialpartner bewusst unterschiedlich zu halten, z.B. bei unterschiedlichen Materialien, Materialgüten oder Materialdicken. In Folge dessen treten die Bramme 16 und das Metallband 15 vorzugsweise mit einer vorbestimmten Temperatur in die Zusammenführungseinrichtung 26 ein.

Die Vorrichtung 10 weist Seitenbeeinflussungseinrichtungen auf, die jeweils stromaufwärts der Zusammenführungseinrichtung 26 und in Linie mit der ersten Gießmaschine 12 bzw. mit der Coil-Abwicklungseinrichtung 14 angeordnet sind. Diese Seitenbeeinflussungseinrichtungen sind in der Darstellung von Fig. 2 lediglich symbolisch durch das Bezugszeichen "32" angedeutet, und können beispielsweise durch Führungslineale ausgebildet sein. Entsprechend werden die Bramme 16 und das Metallband 15 durch diese Führungslineale seitlich geführt und dadurch relativ zueinander ausgerichtet. An dieser Stelle wird gesondert darauf hingewiesen, dass diese Seitenbeeinflussungseinrichtungen 32 auch innerhalb der Zusammenführungseinrichtung 26 angeordnet, und somit als Teil dieser Zusammenführungseinrichtung 26 ausgebildet sein können.

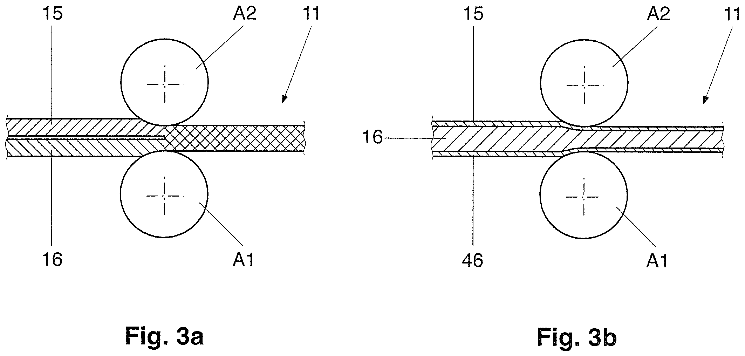

Die vorstehend bereits genannte Walzplattierungseinrichtung 18.1 dient zu dem Zweck, ein Warmwalzen für die Bramme 16 und das Metallband 15 durchzuführen und somit hieraus mittels Walzplattieren ein kontinuierliches bandförmiges Verbundmaterial 11 zu erzeugen. Die Seitenansicht von Fig. 3a zeigt prinzipiell vereinfacht ein zweilagiges Walzschweißen von zwei Materialpartnern, die z.B. aus der Bramme 16 und dem Metallband 15 bestehen können, wenn sie mit den Arbeitswalzen A1, A2 der Walzplattierungseinrichtung 18.1 in Kontakt gelangen und zwischen diesen Arbeitswalzen A1, A2 hindurchgeführt werden. Aus der Seitenansicht von Fig. 3a ist ersichtlich, dass aus der Bramme 16 und dem Metallband 15, wenn sie gemeinsam in die Walzplattierungseinrichtung 18.1 einlaufen, ein Verbund gebildet wird, der dann von den Arbeitswalzen A1, A2 der Walzplattierungseinrichtung warmgewalzt bzw. walzplattiert wird.

Im Anschluss an die Walzplattierungseinrichtung 18.1 bzw. stromabwärts hiervon können weitere Walzgerüste bzw. Walzplattierungseinrichtungen vorgesehen sein, mit denen ein Warmwalzen für das bandförmige Verbundmaterial 11 durchgeführt wird. In der Fig. 1 ist durch das Bezugszeichen "18.i" angedeutet, dass stromabwärts der Walzplattierungseinrichtung 18.1 zumindest eine weitere Walzplattierungseinrichtung oder mehrere solcher Walzgerüste in der Walzstraße 19 angeordnet sein können. Des Weiteren können im Anschluss an die Walzplattierungseinrichtungen 18.i weitere Walzgerüste in der Walzstraße 19 vorgesehen sein.

Die Vorrichtung 10 umfasst - ausweislich der Darstellung in Fig. 2 - eine Reinigungseinrichtung in Form einer Entzunderungseinrichtung 34, die stromaufwärts der Zusammenführungseinrichtung 26 angeordnet ist. Durch diese Entzunderungseinrichtung 34 werden die Bramme 16 und das Metallband 15 geeignet entzundert, was insbesondere dann von Vorteil ist, wenn zumindest einer dieser beiden Materialpartner, oder beide, (jeweils) aus Stahl oder aus einer Stahl-Legierung besteht/bestehen. Des Weiteren verdeutlicht die Seitenansicht von Fig. 2, dass die Vorrichtung 10 eine Schutzgas-Einrichtung 36 umfasst, die in die Zusammenführungseinrichtung 26 integriert ist. In der Darstellung von Fig. 2 ist die Schutzgas-Einrichtung 36 lediglich vereinfacht durch gestrichelte Linien symbolisiert. Die Bramme 16 und das Metallband 15 werden, bevor sie durch die Walzplattierungseinrichtung 18.1 mittels Warmwalzen bzw. Walzplattieren miteinander verbunden werden, durch die Schutzgas-Einrichtung 36 hindurchgeführt, was die Bildung von "frischem" Zunder auf den einander gegenüberliegenden Oberflächen dieser Materialpartner wirkungsvoll verhindert.

Das Verbinden der Bramme 16 und des abgewickelten Metallbands 15 mittels des Warmwalzens in Schritt (iii) kann weiter dadurch verbessert werden, dass eine Oberflächentemperatur von zumindest einem dieser Materialpartner an deren jeweils gegenüberliegenden Seiten beeinflusst, vorzugsweise erhöht wird. Zu diesem Zweck ist unmittelbar stromaufwärts der Walzplattierungseinrichtung 18.1 eine Temperaturbeeinflussungseinrichtung 38 angeordnet, die in der Darstellung von Fig. 2 symbolisch vereinfacht gezeigt ist.

Die Vorrichtung 10 kann auch eine Walzstrasse 19 umfassen, mit der das erzeugte kontinuierliche bandförmige Verbundmaterial 11 auf geringere Dicken ausgewalzt werden kann.

Die Vorrichtung umfasst des Weiteren zumindest eine Messeinrichtung 40, mit der die Materialbeschaffenheit des kontinuierlichen bandförmigen Verbundmaterials 11, das mittels Warmwalzen durch die Walzplattierungseinrichtung 18.1 erzeugt worden ist, erfasst werden kann. Die Messeinrichtung 40 ist z.B. hinter bzw. stromabwärts der Walzplattierungseinrichtung 18.1 angeordnet, und funktioniert vorzugsweise nach dem Prinzip Röntgen und/oder Ultraschall. Hierzu kann vorgesehen sein, zugehörige Sensoren der Messeinrichtung 40 oberhalb und/oder unterhalb des kontinuierlichen bandförmigen Verbundmaterials 11 anzuordnen, so dass damit eine Oberseite und/oder eine Unterseite des Metallbands in Form dieses Verbundmaterials 11 hinsichtlich seiner Materialbeschaffenheit bzw. Oberflächenqualität untersucht werden kann.

Bei der Ausführungsform von Fig. 1 ist die Gießmaschine 12 in Form einer Vertikal-Stranggieß-Einrichtung ausgebildet. Hierbei weist die Gießmaschine 12 eine Kokille 20 mit Wänden auf. Zwischen den Wänden der Kokille 20 wird der Grundwerkstoff als Flüssigmetall von oben eingefüllt. Die Kokille 20 weist an ihrer Unterseite eine Öffnung auf. Entsprechend kann das Flüssigmetall durch diese Öffnung in ein Strangführungssystem 24 austreten, das mit einer Kühlung ausgestattet ist.

An verschiedenen Stellen entlang der Prozesslinie der Vorrichtung 10 sind Trenneinrichtungen 42, z.B. in Form von Brennschneideeinrichtungen, Pendel- oder Trommelscheren oder dergleichen, angeordnet. Diese Trenneinrichtungen 42 ermöglichen ein Herausschneiden bzw. Austragen von nicht verwertbarem Material. Ergänzend und/oder alternativ kann mit Einsatz dieser Trenneinrichtungen 42 auch ein diskontinuierlicher Walzbetrieb von Einzelbändern und/oder ein Notfall-Betrieb mit nur der Gießmaschine 12 realisiert werden. Das Trennen kann auch mit dem Ziel der Verbesserung der nachfolgenden Prozessschritte und/oder zur Erzeugung der Längen des in dieser Anlage erzeugten Endproduktes erfolgen. Diesbezüglich wird darauf hingewiesen, dass die in der Fig. 1 gezeigten Positionen der jeweiligen Trenneinrichtungen 42 lediglich beispielhaft zu verstehen sind.

Am Ende der Walzstraße 19 ist zumindest eine Haspel 44 vorgesehen, um das erzeugte kontinuierliche bandförmige Verbundmaterial 11 zu einem Coil aufzuwickeln. Zweckmäßigerweise kann auch eine Mehrzahl von solchen Haspeln 44 vorgesehen sein, mit entsprechenden (nicht gezeigten) Einrichtungen für ein Umschalten zwischen den einzelnen Haspeln 44. Ergänzend und/oder alternativ kann am Ende der Walzstrasse 19 auch zumindest eine Ablage oder dergleichen vorgesehen sein, um davon Bleche bzw. Grobbleche zu entnehmen.

Die Ausführungsform von Fig. 1 kann dahingehend modifiziert sein, dass eine weitere bzw. zweite (nicht gezeigte) Coil-Abwicklungseinrichtung vorgesehen ist, mit der ein weiteres kontinuierliches Metallband bereitgestellt wird, das ebenfalls als Plattierungswerkstoff dient. Diese weitere Coil-Abwicklungseinrichtung kann ebenfalls in Linie mit der Walzplattierungseinrichtung 18.1 angeordnet sein. Entsprechend ist es möglich, die vorstehend erläuterten Schritte (ii) und (iii) des erfindungsgemäßen Verfahrens mit insgesamt drei Lagen durchzuführen, die aus der sich aus dem mit der Gießmaschine 12 erzeugten Strang 13 durch Erstarren gebildeten Bramme 16 und den beiden von den jeweiligen Coil-Abwicklungseinrichtungen abgewickelten Metallbändern gebildet sind. Ein Walzplattieren von insgesamt drei Lagen zwischen den Arbeitswalzen A1 und A2 der Walzplattierungseinrichtung 18.1 ist prinzipiell vereinfacht in der Seitenansicht von Fig. 3b dargestellt. Hierbei dient die Bramme 16 als Grundwerkstoff, wobei die Metallbänder 15 und 46 als Plattierungswerkstoff dienen, der jeweils an entgegengesetzten Seiten der Bramme 16 aufplattiert wird. Diesbezüglich wird darauf hingewiesen, dass für den Grundwerkstoff (in Form der Bramme 16) einerseits, und für den Plattierungswerkstoff (in Form der Metallbänder 15, 46) andererseits, jeweils unterschiedliche Material- bzw. Stahlgüten verwendet werden können. Der für die Metallbänder 15, 46 verwendete Plattierungswerkstoff kann aus dem gleichen Material bestehen. Des Weiteren wird darauf hingewiesen, dass - abweichend von der Darstellung in Fig. 3b - die beiden Metallbänder 15, 46 auch auf der gleichen Seite der Bramme 16 aufgebracht bzw. aufplattiert werden können.

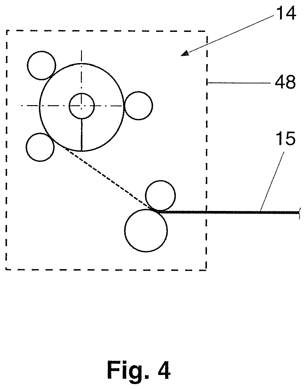

Eine weitere Modifikation der Vorrichtung 10 gemäß Fig. 1 kann in der Weise erfolgen, dass die Coil-Abwicklungseinrichtung 14 in einer beheizbaren Kammer 48 aufgenommen ist. Dies ist vereinfacht in der Darstellung von Fig. 4 gezeigt. Durch eine solche Aufnahme der Coil-Abwicklungseinrichtung 14 in der beheizbaren Kammer 48 ist gewährleistet, dass das hiervon abgewickelte Metallband 15 bereits eine vorbestimmte Temperatur aufweist, im Hinblick auf ein Zusammenführen mit der Bramme 16 und das anschließende Warmwalzen zu einem einzigen kontinuierlichen bandförmigen Verbundmaterial 11. Die Erwärmung der Coil-Abwicklungseinrichtung 14 oder des davon abgewickelten Metallbands 15 in der beheizbaren Kammer 48 kann auch in einer Schutzgas-atmosphäre durchgeführt werden.

Mit den vorstehend erläuterten Ausführungsformen der erfindungsgemäßen Vorrichtung 10 kann das erfindungsgemäße Verfahren zur Herstellung des kontinuierlichen bandförmigen Verbundmaterials 11 durchgeführt werden. Dieses Verfahren kann in Abhängigkeit von zumindest einer der eingangs genannten Prozessgrößen automatisch, und vorzugsweise geregelt, durchgeführt werden.

### Bezugszeichenliste

- 10: Vorrichtung
- 11: kontinuierliches bandförmiges Verbundmaterial
- 12: Gießmaschine
- 13: kontinuierlicher Strang (erzeugt durch die Gießmaschine 12)
- 14: Coil-Abwicklungseinrichtung
- 15: Metallband (das von der Coil-Abwicklungseinrichtung 14 abgewickelt wird)
- 16: Bramme (gebildet aus dem Strang 13)
- 18.1: Walzplattierungseinrichtung
- 18.i: (weitere) Walzplattierungseinrichtung(en)
- 19: Walzstraße
- 20: Kokille
- 24: Strangführungssystem
- 26: Zusammenführungseinrichtung
- 28: Ausgleichswalzgerüst
- 30: erste Erwärmungseinrichtung (z.B. Induktionsheizung)
- 31: zweite Erwärmungseinrichtung (z.B. Induktionsheizung)
- 32: Seitenbeeinflussungseinrichtung (z.B. Führungslineal)
- 34: Reinigungseinrichtung (z.B. Entzunderungseinrichtung)
- 36: Schutzgas-Einrichtung
- 38: Temperaturbeeinflussungseinrichtung
- 40: Messeinrichtung
- 42: Trenneinrichtung (z.B. Trommelschere)
- 44: Haspel
- 46: (weiteres) Metallband
- 48: beheizbare Kammer (zur Aufnahme zumindest einer Coil-Abwicklungseinrichtung 14)
- A1, A2: Arbeitswalzen (der Walzplattierungseinrichtung 18.1)
- T: Transportrichtung (für das bandförmige Verbundmaterial 11)

## Patentansprüche

1. Verfahren zur Herstellung eines kontinuierlichen bandförmigen Verbundmaterials (11), aufweisend die Schritte:
(i) Bereitstellen eines Grundwerkstoffs, der mit zumindest einer Gießmaschine (12) als kontinuierlicher Strang (13) insbesondere aus Stahl erzeugt wird, und Bereitstellen zumindest eines Plattierungswerkstoffs, der in Form zumindest eines Metallbands (15) von einer Coil-Abwicklungseinrichtung (14) abgewickelt wird,
(ii) Zusammenführen einer Bramme (16), die sich aus dem mit der Gießmaschine (12) erzeugten Strang (13) durch Erstarren gebildet hat, und des von der Coil-Abwicklungseinrichtung (14) abgewickelten Metallbands (15), und
(iii) Warmwalzen der in Richtung zueinander gebrachten Materialien gebildet aus der Bramme (16), die sich aus dem mit der Gießmaschine (12) erzeugten Strang (13) durch Erstarren gebildet hat, und dem zumindest einen von der Coil-Abwicklungseinrichtung (14) abgewickelten Metallband (15), so dass damit durch Walzplattieren ein einziges kontinuierliches bandförmiges Verbundmaterial (11) hergestellt wird, das aus dem Grundwerkstoff und dem zumindest einen Plattierungswerkstoff besteht, wobei der Grundwerkstoff in der Gießmaschine (12) vertikal stranggegossen wird **dadurch gekennzeichnet, dass** der Grundwerkstoff durch eine Öffnung einer Kokille (20) der Gießmaschine (12) in ein Strangführungssystem (24) mit einer Kühlung austritt,
**dass** die Coil-Abwicklungseinrichtung (14) in einer beheizbaren Kammer (48) aufgenommen ist und dadurch das darauf aufgewickelte Metallband (15) erwärmt wird,
**dass** vor dem Schritt (ii) und/oder während des Schritts (ii) die aus dem mit der Gießmaschine (12) erzeugten Strang (13) durch Erstarren gebildete Bramme (16) und das von der Coil-Abwicklungseinrichtung (14) abgewickelte Metallband (15) mittels einer Induktionsheizung erwärmt werden, so dass die Bramme (16) und das Metallband (15) im Schritt (ii) im warmen Zustand mit einer Temperatur, die oberhalb der Rekristallisationstemperatur des Grundwerkstoffs und des Plattierungswerkstoffs liegt, zusammengeführt werden, **dass** vor dem Schritt (ii) die aus dem mit der Gießmaschine (12) erzeugten Strang (13) durch Erstarren gebildete Bramme (16) entzundert und das von der Coil-Abwicklungseinrichtung (14) abgewickelte Metallband (15) gereinigt, vorzugsweise entzundert werden,
**dass** vor dem Schritt (iii) eine Oberflächentemperatur zumindest eines Materialpartners gebildet aus der aus dem mit der Gießmaschine (12) erzeugten Strang (13) gebildeten Bramme (16) und/oder dem von der Coil-Abwicklungseinrichtung (14) abgewickelten Metallband (15) an einer Seite, die dem jeweils anderen Materialpartner gegenüberliegt, mittels einer Induktionsheizung erhöht wird.

2. Verfahren nach Anspruch 1, **dadurch gekennzeichnet, dass** vor dem Schritt (ii) eine Geschwindigkeit zumindest eines Materialpartners gebildet aus der mit der Gießmaschine (12) erzeugten Strang (13) durch Erstarren gebildeten Bramme (16) und dem von der Coil-Abwicklungseinrichtung (14) abgewickelten Metallband (15) gesteuert, vorzugsweise geregelt wird, vorzugsweise, dass die Bramme (16) durch ein Ausgleichswalzgerüst (28) hindurchgeführt wird, mit dem die Geschwindigkeit der Bramme (16) steuerbar, vorzugsweise regelbar ist.

3. Verfahren nach einem der vorhergehenden Ansprüche, **dadurch gekennzeichnet, dass** vor dem Schritt (ii) und/oder während des Schritts (ii) und/oder vor dem Schritt (iii) die aus dem mit der Gießmaschine (12) erzeugten Strang (13) durch Erstarren gebildete Bramme (16) und/oder das von der Coil-Abwicklungseinrichtung (14) abgewickelte Metallband (15) seitlich geführt werden, um dadurch die Bramme (16) und das Metallband (15) seitlich zueinander auszurichten, vorzugsweise, dass zur seitlichen Führung zumindest eine Seitenbeeinflussungseinrichtung (32) in Form eines Führungslineals vorgesehen ist, das durch einen Aktuator insbesondere mit einer vorbestimmten Kraft in Richtung der Bandmitte bewegt wird.

4. Verfahren nach einem der vorhergehenden Ansprüche, **dadurch gekennzeichnet, dass** vor dem Schritt (ii) und/oder während des Schritts (ii) und/oder vor dem Schritt (iii) und/oder während des Schritts (iii) die aus dem mit der Gießmaschine (12) erzeugten Strang (13) durch Erstarren gebildete Bramme (16) und/oder das von der Coil-Abwicklungseinrichtung (14) abgewickelte Metallband (15) in einer Schutzgas-Atmosphäre (36) geführt wird/werden.

5. Verfahren nach einem der vorhergehenden Ansprüche, **dadurch gekennzeichnet, dass** im Anschluss an den Schritt (iii) eine Materialbeschaffenheit des erzeugten einzigen kontinuierlichen bandförmigen Verbundmaterials (11) insbesondere durch Röntgen und/oder Ultraschall erfasst wird, vorzugsweise, dass auf Grundlage der erfassten Materialbeschaffenheit durch eine Steuereinrichtung ein Prozesssignal erzeugt wird, mit dem für das Verfahren ein Regelkreis gebildet wird.

6. Verfahren nach einem der vorhergehenden Ansprüche, **dadurch gekennzeichnet, dass** dieses Verfahren automatisch in Abhängigkeit von zumindest einer vorbestimmten Prozessgröße durchgeführt wird, vorzugsweise, dass diese Prozessgröße gewählt ist aus der Gruppe gebildet aus insbesondere der Gießgeschwindigkeit der Gießmaschine (12), einer Änderung der Liquid-Core-Reduction des aus dem mit der Gießmaschine (12) erzeugten Stranges (13), der vor dem Schritt (ii) vorliegenden Geschwindigkeit der aus dem mit der Gießmaschine (12) erzeugten Strang (13) durch Erstarren gebildeten Bramme (16) und/oder des von der Coil-Abwicklungseinrichtung (14) abgewickelten Metallbandes (15), einem Temperaturunterschied der Bramme (16) und des Metallbandes (15) vor dem Schritt (ii) und/oder vor dem Schritt (iii), einer jeweiligen Geschwindigkeit der Arbeitswalzen (A1, A2) der Walzplattierungseinrichtung (18.1) und/oder einer in Schritt (iii) erzielten Dickenreduzierung des erzeugten einzigen kontinuierlichen bandförmigen Verbundmaterials (11).

7. Verfahren nach einem der vorhergehenden Ansprüche, **dadurch gekennzeichnet, dass** in Schritt (iii) der Plattierungswerkstoff auf entgegengesetzten Seiten der sich aus dem mit der Gießmaschine (12) erzeugten Strang (13) durch Erstarren gebildeten Bramme (16) aufgebracht wird, wobei der Plattierungswerkstoff aus dem gleichen Material besteht und von jeweils separaten Coil-Abwicklungseinrichtungen abgewickelt wird.

8. Verfahren nach einem der vorhergehenden Ansprüche, **dadurch gekennzeichnet, dass** der Grundwerkstoff und der zumindest eine Plattierungswerkstoff aus jeweils unterschiedlichen Materialgüten bestehen können, vorzugsweise, dass in Schritt (i) ein weiterer Plattierungswerkstoff in Form eines Metallbandes (15) von einer weiteren Coil-Abwicklungseinrichtung abgewickelt wird, wobei die anschließenden Schritte (ii) und (iii) mit insgesamt drei Lagen, die aus der sich aus dem mit der Gießmaschine (12) erzeugten Strang (13) durch Erstarren gebildeten Bramme (16) und den beiden von den jeweiligen Coil-Abwicklungseinrichtungen abgewickelten Metallbändern gebildet sind, durchgeführt werden.

9. Verfahren nach Anspruch 8, **dadurch gekennzeichnet, dass** die Plattierungswerkstoffe, aus denen die beiden von den jeweiligen Coil-Abwicklungseinrichtungen (14) abgewickelten Metallbändern (15) bestehen, aus jeweils unterschiedlichen Materialien gebildet sind, wobei diese Metallbänder (15) entweder auf entgegengesetzten Seiten der durch den mit der Gießmaschine (12) erzeugten Strang (13) durch Erstarren gebildeten Bramme (16) oder auf der gleichen Seite dieser Bramme (16) aufgebracht werden.

10. Verfahren nach einem der vorhergehenden Ansprüche, **dadurch gekennzeichnet, dass** zwischen die zusammenzuführenden Materialpartner (15, 16) zumindest eine Zwischenschicht in fester, flüssiger oder pulverisierter Form eingebracht wird, welche die einander gegenüberliegenden Oberflächen der Materialpartner (15, 16) passiviert oder aktiviert.

11. Vorrichtung (10) zur Herstellung eines kontinuierlichen bandförmigen Verbundmaterials (11), umfassend
zumindest eine Gießmaschine (12), mit der ein kontinuierlicher Strang (13) insbesondere aus Stahl erzeugt wird, der als Grundwerkstoff dient,
zumindest eine Coil-Abwicklungseinrichtung (14), mit der ein Metallband (15) bereitgestellt wird, das als Plattierungswerkstoff dient,
zumindest ein Walzgerüst in Form einer Walzplattierungseinrichtung (18.1), die in Linie mit der Gießmaschine (12) und mit der Coil-Abwicklungseinrichtung (14) und jeweils stromabwärts hiervon angeordnet ist, wobei die Gießmaschine (12) eine Kokille (20) mit Wänden aufweist, zwischen denen der Grundwerkstoff als Flüssigmetall von oben einfüllbar ist und nach unten durch eine Öffnung (22) in ein Strangführungssystem (24) mit Kühlung austritt,
**dadurch gekennzeichnet, dass** die zumindest eine Coil-Abwicklungseinrichtung (14) innerhalb einer beheizbaren Kammer (48) positioniert ist und eine Schnellwechseleinrichtung aufweist, mittels der ein Austauschen von Coils möglich ist, wobei die Schnellwechseleinrichtung eine Schweißeinrichtung umfasst, um in Schritt (i) eines Verfahrens nach Anspruch 1 aufeinander folgende Metallbänder (15) miteinander zu verschweißen,
**dass** zwischen einerseits der Gießmaschine (12) und der Coil- Abwicklungseinrichtung und andererseits der Walzplattierungseinrichtung (18.1) eine Zusammenführungseinrichtung (26) angeordnet ist, mittels der eine Bramme (16), die sich aus dem mit der Gießmaschine (12) erzeugten Strang (13) durch Erstarren gebildet hat, und das von der Coil-Abwicklungseinrichtung (14) abgewickelte Metallband (15) im warmen Zustand in Richtung zueinander bringbar sind,
**dass** stromaufwärts der Zusammenführungseinrichtung (26) und/oder als Teil hiervon zumindest eine Erwärmungseinrichtung (30) vorgesehen ist, wobei die Bramme (16), die sich aus dem mit der Gießmaschine (12) erzeugten Strang (13) durch Erstarren gebildet hat, und das von der Coil-Abwicklungseinrichtung (14) abgewickelte Metallband (15) durch diese Erwärmungseinrichtung (30) hindurch geführt sind,
**dass** zwischen einerseits der Gießmaschine (12) und der Coil-Abwicklungseinrichtung (14) und andererseits der Zusammenführungseinrichtung (26) zumindest eine Reinigungseinrichtung (34), vorzugsweise eine Entzunderungseinrichtung angeordnet ist, mittels der die aus dem mit der Gießmaschine (12) erzeugten Strang (13) durch Erstarren gebildete Bramme (16) und das von der Coil-Abwicklungseinrichtung (14) abgewickelte Metallband (15) reinigbar, vorzugsweise entzunderbar sind,
dass zwischen der Zusammenführungseinrichtung (26) und der unmittelbar stromabwärts davon angeordneten Walzplattierungseinrichtung (18.1) zumindest eine Temperaturbeeinflussungseinrichtung (38) vorgesehen ist, mittels welcher die Oberflächentemperatur zumindest eines Materialpartners gebildet aus der aus dem mit der Gießmaschine (12) erzeugten Strang (13) gebildeten Bramme (16) und/oder dem von der Coil-Abwicklungseinrichtung (14) abgewickelten Metallband (15) an einer Seite, die dem jeweils anderen Materialpartner gegenüberliegt, erhöht werden kann, so dass eine Anordnung von Materialpartnern gebildet aus der Bramme (16), die sich aus dem mit der Gießmaschine (12) erzeugten Strang (13) durch Erstarren gebildet hat, und dem von der Coil-Abwicklungseinrichtung (14) abgewickelten Metallband (15) in der Walzplattierungseinrichtung (18.1) warmwalzbar ist und damit durch Walzplattieren ein einziges kontinuierliches bandförmiges Verbundmaterial (11), das aus dem Grundwerkstoff und dem zumindest einen Plattierungswerkstoff besteht, entsteht.

12. Vorrichtung (10) nach Anspruch 11, **dadurch gekennzeichnet, dass** zumindest ein Ausgleichswalzgerüst (28) vorgesehen ist, das in Linie zwischen der Gießmaschine (12) und der Zusammenführungseinrichtung (26) angeordnet ist.

13. Vorrichtung (10) nach Anspruch 11 oder 12, **dadurch gekennzeichnet, dass** die Erwärmungseinrichtung (30, 31) nach dem Prinzip einer Induktionsheizung funktioniert, weiter vorzugsweise, dass für die durch den mit der Gießmaschine (12) erzeugten Strang (13) durch Erstarren gebildete Bramme (16) und das von der Coil-Abwicklungseinrichtung (14) abgewickelte Metallband (15) jeweils eine separate Erwärmungseinrichtung (30, 31) vorgesehen ist.

14. Vorrichtung (10) nach einem der Ansprüche 11-13, **dadurch gekennzeichnet, dass** zumindest eine Seitenbeeinflussungseinrichtung (32) vorgesehen ist, die stromaufwärts der Zusammenführungseinrichtung (26) und/oder als Teil dessen und/oder stromaufwärts der Walzplattierungseinrichtung (18.1) angeordnet ist, wobei die aus dem mit der Gießmaschine (12) erzeugten Strang (13) durch Erstarren gebildete Bramme (16) und/oder das von der Coil-Abwicklungseinrichtung (14) abgewickelte Metallband (15) an ihren Seitenrändern in Kontakt mit der Seitenbeeinflussungseinrichtung (32) bringbar sind, um seitlich zueinander ausgerichtet zu werden, vorzugsweise, dass die Seitenbeeinflussungseinrichtung (32) in Form eines Führungslineals ausgebildet ist, das insbesondere mit einer vorbestimmten Kraft in Richtung der Bandmitte bewegbar ist.

15. Vorrichtung (10) nach einem der Ansprüche 11-14, **gekennzeichnet durch** eine Schutzgas-Einrichtung (36), die als Teil der Zusammenführungseinrichtung (26) und/oder als Teil einer stromabwärts unmittelbar angrenzend die Zusammenführungseinrichtung (26) angeordneten Walzplattierungseinrichtung (18.1) vorgesehen ist, wobei die aus dem mit der Gießmaschine (12) erzeugten Strang (13) gebildete Bramme (16) und/oder das von der Coil-Abwicklungseinrichtung (14) abgewickelte Metallband (15) innerhalb dieser Schutzgas-Einrichtung (36) in einer Schutzgas-Atmosphäre geführt ist/sind.

16. Vorrichtung (10) nach einem der Ansprüche 11-15, **dadurch gekennzeichnet, dass** stromabwärts einer Walzplattierungseinrichtung (18.1) eine Messeinrichtung (40) vorgesehen ist, mittels der eine Materialbeschaffenheit des erzeugten einzigen kontinuierlichen bandförmigen Verbundmaterials (11) insbesondere durch Röntgen und/oder Ultraschall erfassbar ist.

17. Vorrichtung (10) nach einem der Ansprüche 11-16, **dadurch gekennzeichnet, dass** die zumindest eine Coil-Abwicklungseinrichtung (14) eine Mehrzahl von Abwickelmodulen aufweist, die nacheinander in eine Abwickelposition bringbar sind, vorzugsweise, dass diese Coil-Abwicklungseinrichtung (14) eine Schweißeinrichtung umfasst, um in Schritt (i) aufeinander folgende Metallbänder (15) miteinander zu verschweißen.

18. Vorrichtung (10) nach einem der Ansprüche 11-17, **dadurch gekennzeichnet, dass** zumindest eine zweite Coil-Abwicklungseinrichtung (14) vorgesehen ist, mit der ein kontinuierliches Metallband (15) bereitgestellt wird, das als weiterer Plattierungswerkstoff dient.

## Claims

1. Method of producing a continuous strip-shaped composite material (11), comprising the steps of:
(i) providing a basic material, which is produced by at least one casting machine (12) as a continuous strip of, in particular, steel, and providing at least one cladding material, which is unwound in the form of at least one metal strip (15) from a coil unwinding device (14),
(ii) bringing together a slab (16) formed by hardening from the strip (13) produced by the casting machine (12) and the metal strip (15) unwound from the coil unwinding device (14), and
(iii) hot-rolling the materials, which are brought in direction towards one another, formed from the slab (16) formed by hardening from the strip (13) produced by the casting machine (12) and the at least one metal strip (15) unwound from the coil unwinding device (14) so that a single continuous strip-shaped composite material (11) consisting of the basic material and the at least one cladding material is thereby produced by roll-bonding, wherein the basic material is continuously vertically cast in the casting machine (12), **characterised in that**
the basic material exits through an opening of a mould (20) of the casting machine (12) into a strip guide system (24) with cooling means,
the coil unwinding device (14) is received in a heatable chamber (48) and the metal strip (15) wound thereon is thereby heated,
prior to the step (ii) and/or during step (ii) the slab (16) formed by hardening from the strip (13) produced by the casting machine (12) and the metal strip (15) unwound from the coil unwinding device (14) are heated by way of induction heating means so that the slab (16) and the metal strip (15) in the step (ii) are brought together in the hot state at a temperature lying above the recrystalisation temperature of the basic material and the cladding material, prior to the step (ii) the slab (16) formed by hardening from the strip (13) produced by the casting machine (12) is descaled and the metal strip (15) unwound from the coil unwinding device (14) is cleaned, preferably descaled, and
prior to the step (iii) a surface temperature of at least one material partner formed from the slab (16) formed from the strip (13) produced by the casting machine (12) and/or the metal strip (15) unwound from the coil unwinding device (14) is increased at a side opposite the respective other material partner by way of induction heating means.

2. Method according to claim 1, **characterised in that** prior to the step (ii) a speed of at least one material partner formed from the slab (16) formed by hardening from the strip (13) produced by the casting machine (12) and the metal strip (15) unwound from the coil unwinding device (14) is controlled, preferably regulated, preferably **in that** the slab (16) is led through a compensating roll stand (28) by which the speed of the slab (16) can be controlled, preferably regulated.

3. Method according to one of the preceding claims, **characterised in that** prior to the step (ii) and/or during the step (ii) and/or prior to step (iii) the slab (16) formed by hardening from the strip (13) produced by the casting machine (12) and/or the metal strip (15) unwound from the coil unwinding device (14) is or are laterally guided so as to thereby laterally align the slab (16) and the metal strip (15) relative to one another, preferably **in that** for lateral guidance at least one side influencing device (32) in the form a guidance straight guide, which is moved in the direction of the strip centre by an actuator particularly with a predetermined force, is provided.

4. Method according to one of the preceding claims, **characterised in that** prior to the step (ii) and/or during the step (ii) and/or prior to the step (iii) and/or during the step (iii) the slab (16) formed by hardening from the strip (13) produced by the casting machine (12) and/or the metal strip (15) unwound from the coil unwinding device (14) is or are guided in a protective gas atmosphere (36).

5. Method according to one of the preceding claims, **characterised in that** subsequently to the step (iii) a material property of the produced single continuous strip-shaped composite material (11) is detected by, in particular, X-rays and/or ultrasound, preferably **in that** on the basis of the detected material property a process signal, by which a regulating circuit for the method is formed, is generated by a control device.

6. Method according to one of the preceding claims, **characterised in that** this method is carried out automatically in dependence on at least one predetermined process variable, preferably **in that** this process variable is selected from the group formed from, in particular, the casting speed of the casting machine (12), a change in the liquid-core reduction of the strip (13) produced by the casting machine (12), the speed, which is present prior to the step (ii), of the slab (16) formed by hardening from the strip (13) produced by the casting machine (12) and/or the metal strip (15) unwound from the coil unwinding device (14), a temperature difference of the slab (16) and the metal strip (15) prior to the step (ii) and/or prior to the step (iii), a respective speed of the work rolls (A1, A2) of the roll-bonding device (18.1) and/or a thickness reduction, which is achieved in step (iii), of the produced single-continuous strip-shaped composite material (11).

7. Method according to one of the preceding claims, **characterised in that** in step (iii) the cladding material is applied to opposite sides of the slab (16) formed by hardening from the strip (13) produced by the casting machine (12), wherein the cladding material consists of the same material and is unwound from respective separate coil unwinding devices.

8. Method according to any one of the preceding claims, **characterised in that** the basic material and the at least one cladding material can respectively consist of different material qualities, preferably **in that** in step (i) a further cladding material in the form of a metal strip (15) is unwound from a further coil unwinding device, wherein the subsequent steps (ii) and (iii) are carried out with, in total, three layers which are formed from the slab (16) formed by hardening from the strip (13) produced by the casting machine (12) and the two metal strips unwound from the respective coil winding devices.

9. Method according to claim 8, **characterised in that** the cladding materials of which the two material strips (15) unwound from the respective coil unwinding devices (14) consist are formed from respectively different materials, wherein these metal strips (15) are applied either to opposite sides of the slab (16) formed by hardening through the strip (13) produced by the casting machine (12) or to the same side of this slab (16).

10. Method according to any one of the preceding claims, **characterised in that** at least one intermediate layer in solid, liquid or powdered form is introduced between the material partners (15, 16) brought together and passivates or activates the mutually opposite surfaces of the material partners (15, 16).

11. Device (10) for producing a continuous strip-shaped composite material (11), comprising
at least one casting machine (12), by which a continuous strip (13), particularly of steel, serving as basic material is produced,
at least one coil unwinding device (14), by which a metal strip (15) serving as cladding material is provided,
at least one roll stand in the form of a roll-bonding device (18.1), which is arranged in line with the casting machine (12) and with the coil unwinding device (14) and respectively downstream thereof,
wherein the casting machine (12) comprises a mould (20) with walls between which the basic material as liquid material can be filled in from above and exits downwardly through an opening (22) into a strip guide system (24) with cooling means,
**characterised in that**
the at least one coil unwinding device (14) is positioned within a heatable chamber (48) and comprises a quick-change device by means of which exchange of coils is possible, wherein the quick-change device comprises a welding device in order to weld together metal strips (15) which are successive in step (i) of a method according to claim 1,
arranged between on the one hand the casting machine (12) and the coil unwinding device and on the other hand the roll-bonding device (18.1) is a device (26) for bringing together, by means of which a slab (16) formed by hardening from the strip (13) produced by the casting machine (12) and the metal strip (15) unwound from the coil unwinding device (14) can be brought in hot state in direction towards one another,
at least one heating device (30) is provided upstream of the device (26) for bringing together and/or as part thereof, wherein the slab (16) formed by hardening from the strip (13) produced by the casting machine (12) and the metal strip (15) unwound from the coil unwinding device (14) are led through the heating device (30),
arranged between on the one hand the casting machine (12) and the coil unwinding device (14) and on the other hand the device (26) for bringing together is at least one cleaning device (34), preferably a descaling device, by means of which the slab (16) formed by hardening from the strip (13) produced by the casting machine (12) and the metal strip (15) unwound from the coil unwinding device (14) can be cleaned, preferably descaled, and provided between the device (26) for bringing together and the roll-bonding device (18.1) arranged directly downstream thereof is at least one temperature-influencing device (38) by means of which the surface temperature of at least one material partner formed from the slab (16) formed from the strip (13) produced by the casting machine (12) and/or the metal strip (15) unwound from the coil unwinding device (14) can be increased at a side opposite the respective other material partner so that an arrangement of material partners formed from the slab (16) formed by hardening from the strip (13) produced by the casting machine (12) and the metal strip (15) unwound from the coil unwinding device (14) can be hot-rolled in the roll-bonding device (18.1) and thus a single continuous strip-shaped composite material (11) consisting of the basic material and the at least one cladding material arises through roll-bonding.

12. Device (10) according to claim 11, **characterised in that** at least one compensating roll stand (28) arranged in line between the casting machine (12) and the device (26) for bringing together is provided.

13. Device (10) according to claim 11 or 12, **characterised in that** the heating device (30, 31) functions according to the principle of induction heating, further preferably **in that** a respective separate heating device (30, 31) is provided for each of the slab (16) formed by hardening by the strip (13) produced by the casting machine (12) and the metal strip (15) unwound from the coil unwinding device (14).

14. Device (10) according to any one of claims 11 to 13, **characterised in that** at least one side influencing device (32) is provided, which is arranged upstream of the device (26) for bringing together and/or as part thereof and/or upstream of the roll-bonding device (18.1), wherein the slab (16) formed by hardening from the strip (13) produced by the casting machine (12) and/or the metal strip (15) unwound from the coil unwinding device (14) can be brought at the side edges thereof into contact with the side influencing device (32) so as to be laterally aligned relative to one another, preferably **in that** the side influencing device (32) is constructed in the form of a guidance straight guide which is movable in the direction of the strip centre with, in particular, a predetermined force.

15. Device (10) according to any one of claims 11 to 14, **characterised by** a protective gas device (36) which is provided as part of the device (26) for bringing together and/or as part of a roll-bonding device (18.1) arranged downstream directly adjacent to the device (26) for bringing together, wherein the slab (16) formed from the strip (13) produced by the casting machine (12) and/or the metal strip (15) unwound from the coil unwinding device (14) is or are guided within this protective gas device (36) in a protective gas atmosphere.

16. Device (10) according to any one of claims 11 to 15, **characterised in that** provided downstream of a roll-bonding device (18.1) is a measuring device (40) by means of which a material property of the produced single continuous strip-shaped composite material (11) is detectable particularly by X-rays and/or ultrasound.

17. Device (10) according to any one of claims 11 to 16, **characterised in that** the at least one coil unwinding device (14) comprises a plurality of unwinding modules which can be brought in succession into an unwinding position, preferably **in that** this coil unwinding device (14) comprises a welding device in order to weld together metal strips (15) which are successive in step (i).

18. Device (10) according to any one of claims 11 to 17, **characterised in that** at least one second coil unwinding device (14) is provided, by which a continuous metal strip (15) serving as further cladding material is provided.

## Revendications

1. Procédé pour la fabrication d'une matière composite continue (11) sous la forme d'une bande, présentant les étapes dans lesquelles :
(i) on met à disposition un matériau de base que l'on obtient, avec au moins une machine de coulée (12), sous la forme d'une barre continue (13) en particulier en acier, et on met à disposition au moins un matériau de placage qui est déroulé, sous la forme d'au moins une bande métallique (15), à partir d'un mécanisme de déroulement d'une bobine (14) ;
(ii) on guide de manière conjointe une brame (16), que l'on a obtenue par solidification à partir de la barre (13) générée avec la machine de coulée (12), et la bande métallique (15) déroulée du mécanisme de déroulement de bobine (14) ; et
(iii) on soumet à un laminage à chaud les matières amenées dans la direction l'une de l'autre que l'on obtient à partir de la brame (16) que l'on a obtenue par solidification à partir de la barre (13) générée avec la machine de coulée (12), et de ladite au moins une bande métallique (15) déroulée du mécanisme de déroulement de bobine (14), si bien que l'on obtient de cette manière, par l'intermédiaire d'un placage par laminage, une matière composite unique continue (11) sous la forme d'une bande, qui est constituée par le matériau de base et par ledit au moins un matériau de placage ;
dans lequel on soumet le matériau de base à une coulée continue en direction verticale dans la machine de coulée (12) ;
**caractérisé en ce que** le matériau de base sort en passant par une ouverture pratiquée dans une lingotière (20) de la machine de coulée (12) pour pénétrer dans un système de guidage de barre (24) équipé d'un refroidissement ;
**en ce que** le mécanisme de déroulement de bobine (14) est logé dans une chambre (48) qui peut être chauffée, si bien que, de cette manière, la bande métallique (15) enroulée sur le mécanisme en question est chauffée ;
**en ce que**, avant l'étape (ii) et/ou au cours de l'étape (ii), la brame (16), que l'on a obtenue par solidification à partir de la barre (13) générée avec la machine de coulée (12), et la bande métallique (15) déroulée du mécanisme de déroulement de bobine (14) sont chauffées au moyen d'un chauffage du type à induction, d'une manière telle que la brame (16) et la bande métallique (15) sont guidées de manière conjointe, à l'étape (ii), à l'état chaud avec une température qui est supérieure à la température de recristallisation du matériau de base et du matériau de placage ;
**en ce que**, avant l'étape (ii), on soumet à un décalaminage la brame (16), que l'on a obtenue par solidification à partir de la barre (13) générée avec la machine de coulée (12), et à un nettoyage, de préférence à un décalaminage, la bande métallique (15) déroulée du mécanisme de déroulement de bobine (14) ;
**en ce que**, avant l'étape (iii), l'on élève une température superficielle d'au moins un partenaire matériel que l'on obtient à partir de la brame (16), que l'on a obtenue par solidification à partir de la barre (13) générée avec la machine de coulée (12) et/ou à partir de la bande métallique (15) déroulée du mécanisme de déroulement de bobine (14), sur un côté qui est opposé à l'autre partenaire matériel respectif, au moyen d'un chauffage du type à induction.

2. Procédé selon la revendication 1, **caractérisé en ce que**, avant l'étape (ii), on commande, de préférence on règle une vitesse d'au moins un partenaire matériel que l'on obtient à partir de la brame (16), que l'on a obtenue par solidification à partir de la barre (13) générée avec la machine de coulée (12) et à partir de la bande métallique (15) déroulée du mécanisme de déroulement de bobine (14), de préférence d'une manière telle que la brame (16) est guidée à travers une cage de laminoir de compensation (28) avec laquelle on peut commander, de préférence on peut régler la vitesse de la brame (16).

3. Procédé selon l'une quelconque des revendications précédentes, **caractérisé en ce que**, avant l'étape (ii) et/ou pendant l'étape (ii) et/ou avant l'étape (iii), on soumet à un guidage latéral la brame (16), que l'on a obtenue par solidification à partir de la barre (13) générée avec la machine de coulée (12) et/ou la bande métallique (15) déroulée du mécanisme de déroulement de bobine (14), dans le but d'ainsi orienter la brame (16) et la bande métallique (15) latéralement l'une en direction de l'autre, de préférence, **en ce que** l'on prévoit, à des fins de guidage latéral, au moins un mécanisme (32) destiné à influencer les côtés, sous la forme d'une règle de guidage qui est mise en mouvement à l'intervention d'un actionneur, en particulier avec une force prédéterminée dans la direction du milieu de la bande.

4. Procédé selon l'une quelconque des revendications précédentes, **caractérisé en ce que**, avant l'étape (ii) et/ou pendant l'étape (ii) et/ou avant l'étape (iii) et/ou pendant l'étape (iii), on guide la brame (16), que l'on a obtenue par solidification à partir de la barre (13) générée avec la machine de coulée (12) et/ou la bande métallique (15) déroulée du mécanisme de déroulement de bobine (14) dans une atmosphère de gaz de protection (36).

5. Procédé selon l'une quelconque des revendications précédentes, **caractérisé en ce que**, dans la foulée de l'étape (iii), on enregistre une qualité matérielle de la matière composite continue unique (11) que l'on a obtenue sous la forme d'une bande, en particulier en faisant appel à des rayons X et/ou à des ultrasons ; de préférence, **en ce que**, sur base de la qualité matérielle enregistrée, on génère un signal de traitement par l'intermédiaire d'un mécanisme de commande, signal avec lequel on forme un circuit de réglage pour le procédé.

6. Procédé selon l'une quelconque des revendications précédentes, **caractérisé en ce que** ce procédé est mis en oeuvre de manière automatique en fonction d'au moins un paramètre de processus prédéterminé ; de préférence, **en ce que** ce paramètre de processus est choisi parmi le groupe formé en particulier par la vitesse de coulée de la machine de coulée (12), par une modification de la réduction de la partie centrale liquide de la barre (13) générée avec la machine de coulée (12), par la vitesse, en vigueur avant l'étape (ii) de la brame (16) que l'on a obtenue par solidification à partir de la barre (13) générée avec la machine de coulée (12) et/ou de la bande métallique (15) déroulée du mécanisme de déroulement de bobine (14), par une différence de température de la brame (16) et de la bande métallique (15) avant l'étape (ii) et/ou avant l'étape (iii), par une vitesse respective des cylindres de travail (A1, A2) du mécanisme de placage par laminage (18.1) et/ou par une réduction de l'épaisseur, que l'on a atteint à l'étape (iii), de la matière composite continue unique (11) que l'on obtient sous la forme d'une bande.

7. Procédé selon l'une quelconque des revendications précédentes, **caractérisé en ce que**, à l'étape (iii), le matériau de placage est appliqué sur des côtés opposés de la brame (16) que l'on a obtenue par solidification à partir de la barre (13) générée avec la machine de coulée (12) ; dans lequel le matériau de placage est constitué de la même matière et est déroulé à partir de mécanismes de déroulement de bobine respectivement séparés.

8. Procédé selon l'une quelconque des revendications précédentes, **caractérisé en ce que** le matériau de base et ledit au moins un matériau de placage peuvent être constitués par respectivement des qualités de matières respectivement différentes ; de préférence **en ce que**, à l'étape (i), on déroule un matériau de placage supplémentaire sous la forme d'une bande métallique (15) à partir d'un mécanisme de déroulement de bobine supplémentaire ; dans lequel les étapes (ii) et (iii) qui y font directement suite sont mises en œuvre avec au total trois couches qui sont formées par la brame (16) que l'on a obtenue par solidification à partir de la barre (13) générée avec la machine de coulée (12) et par les deux bandes métalliques déroulées à partir des mécanismes de déroulement de bobine respectifs.

9. Procédé selon la revendication 8, **caractérisé en ce que** les matériaux de placage, dont sont constituées les deux bandes métalliques (15) déroulées à partir des mécanismes de déroulement de bobine respectifs (14), sont réalisés à partir de matières respectivement différentes ; dans lequel ces bandes métalliques (15) sont appliquées, soit sur des côtés opposés de la brame (16) que l'on a obtenue par solidification à partir de la barre (13) générée avec la machine de coulée (12), soit sur le même côté de cette brame (16).

10. Procédé selon l'une quelconque des revendications précédentes, **caractérisé en ce que**, entre les partenaires matériels (15, 16) qui doivent être guidés de manière conjointe, on intercale au moins une couche intermédiaire sous une forme solide, liquide ou pulvérulente, qui déploie un effet de passivation ou d'activation sur les surfaces respectivement opposées des partenaires matériels (15, 16).

11. Dispositif (10) destiné à la fabrication d'une matière composite continue (11) sous la forme d'une bande, comprenant :
au moins une machine de coulée (12) avec laquelle on obtient une barre continue (13) en particulier en acier, qui fait office de matériau de base ;
au moins un mécanisme de déroulement de bobine (14) avec lequel on met à disposition une bande métallique (15) qui fait office de matériau de placage ;
au moins une cage de laminoir sous la forme d'un mécanisme de placage par laminage (18.1) qui est disposée en ligne avec la machine de coulée (12) et avec le mécanisme de déroulement de bobine (14) et respectivement en aval des éléments que l'on vient de citer ;
dans lequel la machine de coulée (12) présente une lingotière (20) comprenant des parois entre lesquelles le matériau de base peut être introduit à partir du haut sous la forme d'un métal liquide et peut ressortir vers le bas en passant par une ouverture (22) pour pénétrer dans un système de guidage de barre (24) équipé d'un refroidissement ;
**caractérisé**
**en ce que** ledit au moins un mécanisme de déroulement de bobine (14) est disposé à l'intérieur d'une chambre (48) qui peut être chauffée et présente un mécanisme de changement rapide, au moyen duquel on peut envisager un échange de bobines ; dans lequel le mécanisme d'échange rapide comprend un mécanisme de soudage destiné à souder l'une avec l'autre des bandes métalliques (15) qui se succèdent au cours de l'étape (i) d'un procédé selon la revendication 1 ;
**en ce que**, entre d'une part la machine de coulée (12) et le mécanisme de déroulement de bobine (14), et d'autre part le mécanisme de placage par laminage (18.1), est disposé un mécanisme de guidage conjoint (26) au moyen duquel on peut amener dans la direction l'une de l'autre une brame (16) que l'on a obtenue par solidification à partir de la barre (13) générée avec la machine de coulée (12) et la bande métallique (15) déroulée à partir du mécanisme de déroulement de bobine (14), à l'état chaud ;
**en ce que**, en amont du mécanisme de guidage conjoint (26) et/ou sous la forme d'une partie de ce dernier, on prévoit au moins un mécanisme de chauffage (30) ; dans lequel on guide la brame (16) que l'on a obtenue par solidification à partir de la barre (13) générée avec la machine de coulée (12) et la bande métallique (15) déroulée à partir du mécanisme de déroulement de bobine (14) de part en part à travers ce mécanisme de chauffage (30) ;
**en ce que**, entre d'une part la machine de coulée (12) et le mécanisme de déroulement de bobine (14), et d'autre part le mécanisme de guidage conjoint (26), est disposé au moins un mécanisme de nettoyage (34), de préférence un mécanisme de décalaminage au moyen duquel on peut nettoyer, de préférence on décalaminer la brame (16) que l'on a obtenue par solidification à partir de la barre (13) générée avec la machine de coulée (12) et la bande métallique (15) déroulée à partir du mécanisme de déroulement de bobine (14) ;
**en ce que**, entre le mécanisme de guidage conjoint (26) et le mécanisme de placage par laminage (18.1) disposé directement en amont par rapport au premier cité, on prévoit au moins un mécanisme (38) qui influence la température, au moyen duquel on peut élever la température superficielle d'au moins un partenaire matériel que l'on obtient à partir de la brame (16) que l'on a obtenue par solidification à partir de la barre (13) générée avec la machine de coulée (12) et/ou à partir de la bande métallique (15) déroulée à partir du mécanisme de déroulement de bobine (14), sur un côté qui est opposé à respectivement l'autre partenaire matériel, d'une manière telle que l'on peut soumettre à un laminage à chaud un agencement de partenaires matériels constitué par la brame (16), que l'on a obtenue par solidification à partir de la barre (13) générée avec la machine de coulée (12), et par la bande métallique (15) déroulée à partir du mécanisme de déroulement de bobine (14), dans le mécanisme de placage par laminage (18.1), d'une manière telle que l'on obtient par l'intermédiaire du placage par laminage une matière composite continue unique (11) sous la forme d'une bande qui est constituée par le matériau de base et par ledit au moins un matériau de placage.

12. Dispositif (10) selon la revendication 11, **caractérisé en ce que** l'on prévoit au moins une cage de laminoir de compensation (28), qui est disposée en ligne entre la machine de coulée (12) et avec le mécanisme de guidage conjoint (26).

13. Dispositif (10) selon la revendication 11 ou 12, **caractérisé en ce que** le mécanisme de chauffage (30, 31) fonctionne conformément au principe d'un chauffage du type à induction ; de manière plus préférée **en ce que** l'on prévoit pour la brame (16) que l'on a obtenue par solidification à partir de la barre (13) générée avec la machine de coulée (12) et pour la bande métallique (15) déroulée à partir du mécanisme de déroulement de bobine (14), respectivement un mécanisme de chauffage séparé (30, 31).

14. Dispositif (10) selon l'une quelconque des revendications 11 à 13, **caractérisé en ce que** l'on prévoit au moins un mécanisme (32) destiné à influencer les côtés qui est disposé en amont du mécanisme de guidage conjoint (26) et/ou sous la forme d'une partie de ce dernier et/ou en amont du mécanisme de placage par laminage (18.1) ; dans lequel la brame (16) que l'on a obtenue par solidification à partir de la barre (13) générée avec la machine de coulée (12) et/ou la bande métallique (15) déroulée à partir du mécanisme de déroulement de bobine (14) peuvent être amenées d'une manière telle que leurs bords latéraux entrent en contact avec le mécanisme (32) destiné à influencer les côtés afin d'être orientés latéralement l'une par rapport à l'autre ; de préférence, **en ce que** le mécanisme (32) destiné à influencer les côtés est réalisé sous la forme d'une règle de guidage qui peut être mise en mouvement, en particulier avec une force prédéterminée, dans la direction du milieu de la bande.

15. Dispositif (10) selon l'une quelconque des revendications 11 à 14, **caractérisé par** un mécanisme procurant un gaz de protection (36) qui est prévu sous la forme d'une partie du mécanisme de guidage conjoint (26) et/ou sous la forme d'une partie d'un mécanisme de placage par laminage (18.1) disposé en aval, en position directement limitrophe au mécanisme de guidage conjoint (26) ; dans lequel on guide la brame (16) que l'on a obtenue par solidification à partir de la barre (13) générée avec la machine de coulée (12) et/ou la bande métallique (15) déroulée à partir du mécanisme de déroulement de bobine (14) à l'intérieur de ce mécanisme procurant un gaz de protection (36) dans une atmosphère d'un gaz de protection.

16. Dispositif (10) selon l'une quelconque des revendications 11 à 15, **caractérisé en ce que** l'on prévoit, en aval d'un mécanisme de placage par laminage (18.1), un mécanisme de mesure (40) au moyen duquel on peut enregistrer une qualité matérielle de la matière composite continue unique (11) que l'on obtient sous la forme d'une bande, en particulier en utilisant des rayons X et/ou des ultrasons.

17. Dispositif (10) selon l'une quelconque des revendications 11 à 16, **caractérisé en ce que** ledit au moins un mécanisme de déroulement de bobine (14) présente une multitude de modules de déroulement qui peuvent être montés les uns derrière les autres dans une position de déroulement ; de préférence **en ce que** ce mécanisme de déroulement de bobine (14) comprend un mécanisme de soudage destiné à souder l'une à l'autre des bandes métalliques (15) qui se succèdent à l'étape (i).

18. Dispositif (10) selon l'une quelconque des revendications 11 à 17, **caractérisé en ce que** l'on prévoit au moins un deuxième mécanisme de déroulement de bobine (14) avec lequel on met à disposition une bande métallique continue (15) qui fait office de matériau de placage supplémentaire.
